# EUROPEAN PATENT APPLICATION

(11) **EP 2 896 598 A1**
(43) Date of publication of application: **22.07.2015**
(21) Application number: 14151625.2
(22) Date of filing: 17.01.2014
(51) Int. Cl.: C01C 1/04, C01B 3/36, C01B 3/48, C01B 13/02, C10J 3/20

(54) **System and process for producing ammonia using an ion transport membrane, gasifier, and ammonia synthesis unit**

(71) Applicant: AIR PRODUCTS AND CHEMICALS, INC., Allentown, PA 18195-1501 (US)
(72) Inventor: NATARAJ, Shankar, PA, 18103 Allentown (US); REPASKY, John Michael, PA, 18104 Allentown (US); WOODS, Charles Mitchell, PA, 18053 Germansville (US)
(74) Representative: Schwabe - Sandmair - Marx

(57) **Abstract**

System for producing ammonia wherein a gasifier is used to make synthesis gas to provide hydrogen to an ammonia reactor. An ion transport membrane assembly and a cryogenic air separation are used to provide oxygen for a gasifier. The ion transport membrane assembly also provides high pressure nitrogen for use in the ammonia reactor.

## Description

### STATEMENT REGARDING FEDERALLY SPONSORED RESEARCH OR DEVELOPMENT

This invention was made with government support under Cooperative Agreement No. DE-FC26-98FT40343 between Air Products and Chemicals, Inc. and the U.S. Department of Energy. The United States Government has certain rights in this invention.

### BACKGROUND

The reaction of nitrogen and hydrogen to provide ammonia is well-known. The commercial production of ammonia was developed in the early 1900s. Ammonia is produced by the direct reaction of hydrogen gas and nitrogen gas in the presence of an iron-based catalyst: 3H₂+N₂→2NH₃. The ammonia synthesis reaction is exothermic. Hence, the equilibrium will be shifted toward the formation of ammonia as the reaction temperature is lowered. As a practical matter, however, the reaction temperature must be maintained at a sufficiently elevated level to permit the synthesis of acceptable quantities of product in a reasonably short time due to the reaction kinetics. This is true even though a catalyst is customarily employed to accelerate the reaction rate. Thermodynamic considerations also favor carrying out the reaction at high pressures, typically in the range of about 1.5 to about 34.6 MPa. These high pressures require considerable energy, usually in the form of steam or electricity, for compression.

Generally, the commercial synthesis of ammonia has two main steps. First, the ammonia synthesis feedstock gas is prepared. This involves generating an appropriate mixture of hydrogen and nitrogen gases, and removing impurities and components that may poison catalysts. The main gases that poison ammonia catalyst include carbon dioxide and carbon monoxide, although sulfur and dioxygen may also poison the ammonia catalyst. Carbon monoxide in the gas is converted to hydrogen and carbon dioxide using the water-gas shift reaction, which involves the reaction of the carbon monoxide with steam over a shift catalyst. Carbon dioxide can be removed by various gas purification technologies. Second, the ammonia synthesis feedstock gas is passed through the ammonia synthesis reactor. The ammonia product gas leaving the ammonia synthesis reactor is cooled, the ammonia product is recovered, and unreacted ammonia synthesis gas (i.e. H₂ and N₂) is recycled to the ammonia synthesis reactor.

Steam methane reforming (SMR) has been the traditional source of hydrogen for ammonia synthesis, but is only suitable where the feedstock is a light hydrocarbon such as natural gas. The natural gas-based ammonia industry uses natural gas both as a feedstock and as an energy (fuel) supply. The lack of availability of natural gas in certain regions of the world, however, has caused several ammonia producers to employ alternative feedstocks and production processes.

Gasification is becoming an attractive method to generate the quantity of hydrogen required for ammonia production facilities. Gasification can be used to generate synthesis gas or "syngas" from carbonaceous feedstocks such as coal, petroleum coke, residual oil, municipal waste, biomass, wood, and other materials. The carbonaceous feedstock is gasified in the presence of oxygen. Oxygen is usually generated by a cryogenic air separation unit from which nitrogen is removed from the air to form purified oxygen. U.S. Patent Application Publication US 2006/0228284 describes an exemplary process integration of gasification and ammonia production.

The availability of nitrogen from air separation and hydrogen-containing synthesis gas from gasification has led to the use of gasification as a means to supply hydrogen and nitrogen feedstock for ammonia synthesis. Synthesis gas produced in the gasifier can be passed to a shift reaction section where CO is converted to H₂ and CO₂ by reaction with steam over a shift catalyst. The shifted gas may be refined further, often by separation to form a purified hydrogen gas stream. For example, the shifted synthesis gas stream can be purified in an acid gas removal and purification section, and the purified hydrogen product can be supplied to the ammonia synthesis unit. The synthesis gas stream can be processed to obtain a hydrogen gas stream of greater than 99.9 mole percent purity. By-product nitrogen gas may be taken from the cryogenic air separation unit, purified, and then mixed with the hydrogen gas to create the ammonia synthesis feed gas.

A cryogenic air separation unit (ASU) can reject nitrogen at ambient pressure quite efficiently. Even though substantial amounts of pure nitrogen are generated in the high pressure column, typically at about 0.6 MPa, the pressure can be used to provide refrigeration to the cryogenic distillation process via expansion turbines. Alternatively, the pressure can be retained to provide nitrogen product, in which case refrigeration has to be provided differently. Product nitrogen from the ASU has to be compressed from about 0.6 MPa to the ammonia synthesis unit pressure when the nitrogen from the ASU is used as feed to the ammonia synthesis unit.

Industry desires nitrogen at pressures suitable for the ammonia synthesis unit.

Industry desires to minimize the power required for compressing the nitrogen feed to the ammonia synthesis unit.

Related disclosures include US 2006/0228284, US7300642, EP0916385, and WO 2012/025767.

### BRIEF SUMMARY

The present invention relates to a system for producing ammonia.

In the following, specific aspects of the system will be outlined. The reference signs and expressions set in parentheses are referring to an example embodiment explained further below with reference to the figure. The reference signs and expressions are, however, only illustrative and do not limit the aspect to any specific component or feature of the example embodiment. The aspects can be formulated as claims in which the reference signs and expressions set in parentheses are omitted or replaced by others as appropriate.

There are several aspects of the process as outlined below.

Aspect 1. A system for producing ammonia, the system comprising:
an ion transport membrane assembly (70) comprising an ion transport membrane layer and having an inlet for introducing a first feed gas (71) comprising oxygen and nitrogen into the ion transport membrane assembly (70), a first outlet for withdrawing a nitrogen product (73) from the ion transport membrane assembly, and a second outlet for withdrawing an oxygen product (75) from the ion transport membrane assembly (70);
a gasifier (20) operatively disposed to receive at least a portion of the oxygen product (75) from the ion transport membrane assembly (70), the gasifier for reacting a carbonaceous material (21) with a substoichiometric amount of oxygen, the oxygen provided by the at least a portion of the oxygen product (75) to produce a synthesis gas (23) comprising H₂, CO₂, CO, and H₂O;
a shift reactor (30) operatively disposed to receive at least a portion of the synthesis gas (23) from the gasifier (20), the shift reactor (30) for reacting the CO in the at least a portion of the synthesis gas with H₂O (31) in the presence of a shift catalyst to produce additional H₂ and CO₂ in the at least a portion of the synthesis gas (23);
a separator (50) operatively disposed to receive at least a portion of the synthesis gas (23) from the shift reactor (30), the separator (50) for separating the at least a portion of the synthesis gas (23) to form a hydrogen product (51) and a by-product (53) comprising at least CO₂, H₂S, and H₂O; and
an ammonia synthesis unit (60) operatively disposed to receive at least a portion of the hydrogen product (51) from the separator (50) and operatively disposed to receive at least a portion of the nitrogen product (73) from the ion transport membrane assembly (70), the ammonia synthesis unit (60) for reacting the at least a portion of the hydrogen product (51) with the at least a portion of the nitrogen product (73) in said ammonia synthesis unit (60) to produce an ammonia product (63).

Aspect 2. The system according to aspect 1 further comprising:
a cryogenic air separation unit (10) for producing a second oxygen product (13) and a nitrogen-containing by-product (15);
wherein the gasifier (20) is operatively disposed to receive at least a portion of the second oxygen product (13) from the cryogenic air separation unit (10) in addition to being operatively disposed to receive the at least a portion of the oxygen product (75) from the ion transport membrane assembly (70), wherein the gasifier (20) is for reacting the carbonaceous material (21) with the second oxygen product (13) in addition to the oxygen product (75) from the ion transport membrane assembly (70) to produce the synthesis gas (23) comprising H₂, CO₂, CO, and H₂O.

Aspect 3. A system for producing ammonia, the system comprising:
an ion transport membrane assembly (70) comprising an ion transport membrane layer and having an inlet for introducing a first feed gas (71) comprising oxygen and nitrogen into the ion transport membrane assembly (70), a first outlet for withdrawing a nitrogen product (73) from the ion transport membrane assembly, and a second outlet for withdrawing an oxygen product (75) from the ion transport membrane assembly (70);
a cryogenic air separation unit (10) for producing a second oxygen product (13) and a nitrogen-containing by-product (15);
a gasifier (20) operatively disposed to receive at least a portion of the oxygen product (75) from the ion transport membrane assembly (70) and at least a portion of the second oxygen product (13) from the cryogenic air separation unit (10), the gasifier for reacting a carbonaceous material (21) with a substoichiometric amount of oxygen, the oxygen provided by the at least a portion of the oxygen product (75) and the at least a portion of the second oxygen product (13) to produce a synthesis gas (23) comprising H₂, CO₂, CO, and H₂O;
a shift reactor (30) operatively disposed to receive at least a portion of the synthesis gas (23) from the gasifier (20), the shift reactor (30) for reacting the CO in the at least a portion of the synthesis gas with H₂O (31) (in the presence of a shift catalyst) to produce additional H₂ and CO₂ in the at least a portion of the synthesis gas (23);
a separator (50) operatively disposed to receive at least a portion of the synthesis gas (23) from the shift reactor (30), the separator (50) for separating the at least a portion of the synthesis gas (23) to form a hydrogen product (51) and a by-product (53) comprising at least CO₂, H₂S, and H₂O; and
an ammonia synthesis unit (60) operatively disposed to receive at least a portion of the hydrogen product (51) from the separator (50) and operatively disposed to receive at least a portion of the nitrogen product (73) from the ion transport membrane assembly (70), the ammonia synthesis unit (60) for reacting the at least a portion of the hydrogen product (51) with the at least a portion of the nitrogen product (73) in said ammonia synthesis unit (60) to produce an ammonia product (63).

Aspect 4. The system of any one of aspects 1 to 3 further comprising:
a cryogenic wash unit (90), the cryogenic wash unit (90) operatively disposed to receive at least a portion of the hydrogen product (51) from the separator (50) and operatively disposed to receive at least a portion of the nitrogen product (73) from the ion transport membrane assembly (70), to form a mixture (95) comprising hydrogen and nitrogen and a by-product (93) comprising at least CO;
wherein the ammonia synthesis unit (60) is operatively disposed to receive at least a portion of the mixture (95) comprising hydrogen and nitrogen from the cryogenic wash unit (90) such that the ammonia converter is thereby operatively disposed to receive the at least a portion of the hydrogen product (51) from the separator (50) section and the at least a portion of the nitrogen product (73) from the ion transport membrane assembly (70) via the cryogenic wash unit (90).

Aspect 5. A system for producing ammonia, the system comprising:
an ion transport membrane assembly (70) comprising an ion transport membrane layer and having an inlet for introducing a first feed gas (71) comprising oxygen and nitrogen into the ion transport membrane assembly (70), a first outlet for withdrawing a nitrogen product (73) from the ion transport membrane assembly, and a second outlet for withdrawing an oxygen product (75) from the ion transport membrane assembly (70);
a cryogenic air separation unit (10) for producing a second oxygen product (13) and a nitrogen-containing by-product (15);
a gasifier (20) operatively disposed to receive at least a portion of the oxygen product (75) from the ion transport membrane assembly (70) and at least a portion of the second oxygen product (13) from the cryogenic air separation unit (10), the gasifier for reacting a carbonaceous material (21) with a substoichiometric amount of oxygen, the oxygen provided by the at least a portion of the oxygen product (75) and the at least a portion of the second oxygen product (13) to produce a synthesis gas (23) comprising H₂, CO₂, CO, and H₂O;
a shift reactor (30) operatively disposed to receive at least a portion of the synthesis gas (23) from the gasifier (20), the shift reactor (30) for reacting the CO in the at least a portion of the synthesis gas (23) with H₂O (31) in the presence of a shift catalyst to produce additional H₂ and CO₂ in the at least a portion of the synthesis gas (23);
a separator (50) operatively disposed to receive at least a portion of the synthesis gas (23) from the shift reactor (30), the separator (50) for separating the at least a portion of the synthesis gas (23) to form a hydrogen product (51) and a by-product (53) comprising at least CO₂, H₂S, and H₂O;
a cryogenic wash unit (90), the cryogenic wash unit (90) operatively disposed to receive at least a portion of the hydrogen product (51) from the separator (50) and operatively disposed to receive at least a portion of the nitrogen product (73) from the ion transport membrane assembly (70), to form a mixture (95) comprising hydrogen and nitrogen and a by-product (93) comprising at least CO; and
an ammonia synthesis unit (60) operatively disposed to receive at least a portion of the mixture (95) comprising hydrogen and nitrogen from the cryogenic wash unit (90), the ammonia synthesis unit (60) for reacting the at least a portion of the mixture (95) comprising hydrogen and nitrogen in said ammonia synthesis unit (60) to produce an ammonia product (63).

Aspect 6. The system of aspect 4 or aspect 5 wherein the by-product (93) from the cryogenic wash unit (90) comprises at least one of oxygen, argon, and methane.

Aspect 7. The system according to any one of aspects 1 to 6 wherein the gasifier is an autothermal reformer. When the gasifier is an autothermal reformer, the carbonaceous material may comprise natural gas or may comprise methane.

Aspect 8. The system according to any one of aspects 1 to 7 wherein the carbonaceous material comprises at least one of coal, petroleum coke, and natural gas.

Aspect 9. The system according to any one of aspects 1 to 8 wherein the carbonaceous material comprises methane.

Aspect 10. The system according to any one of aspects 1 to 9 further comprising:
a second separator (80) operatively disposed to receive at least a portion of the nitrogen product (73) from the ion transport membrane assembly (70), the second separator (80) for separating the at least a portion of the nitrogen product (73) to form a nitrogen-rich product (83) and a by-product (85) comprising at least one of the contaminants in the nitrogen product (73), wherein the ammonia synthesis unit (60) is operatively disposed to receive the nitrogen-rich product (83) as the at least a portion of the nitrogen product (73) from the ion transport membrane assembly (70).

Aspect 11. The system according to aspect 10 wherein the at least one of the contaminants in the nitrogen product (73) is diatomic oxygen, (O₂).

Aspect 12. The system according to aspect 11 wherein the second separator (80) comprises an adsorbent that is selective for diatomic O₂.

Aspect 13. The system according to aspect 11 wherein the second separator (80) comprises an electrically driven ion transport membrane for removing oxygen.

Aspect 14. The system according to aspect 11 wherein the second separator (80) comprises a reactively purged ion transport membrane for removing oxygen.

Aspect 15. The system according to aspect 10 wherein the second separator (80) comprises a cryogenic distillation apparatus for removing diatomic oxygen and/or argon, wherein the at least one of the contaminants is diatomic oxygen and/or argon.

Aspect 16. The system according to any one of aspects 1 to 15 further comprising a combustor (100) operatively disposed to receive the nitrogen product (73) from the ion transport membrane assembly (70), the combustor (100) for reducing the concentration of the diatomic oxygen in the nitrogen product (73) by reacting the diatomic oxygen with a fuel (101). The ammonia synthesis unit (60) is operatively disposed to receive the at least a portion of the nitrogen product (73) reduced in the concentration of the diatomic oxygen from the combustor (100).

Aspect 17. The system according to aspect 16 wherein the combustor (100) comprises a catalyst that promotes combustion of the fuel (101) with the diatomic oxygen.

Aspect 18. The system according to aspect 16 or aspect 17 wherein the combustor (100) is operatively disposed to receive a portion of the synthesis gas (23) (for example, a portion of the hydrogen product (51)) as at least a portion of the fuel (101).

Aspect 19. The system according to any one of aspects 1 to 18 wherein the separator (50) comprises an electrically-driven membrane or a reactionally-driven membrane.

Aspect 20. The system according to any one of aspects 1 to 19 wherein the separator (50) comprises a polymeric membrane.

Aspect 21. The system according to any one of aspects 1 to 20 wherein the separator (50) comprises a cryogenic distillation device.

Aspect 22. The system according to any one of aspects 1 to 21 further comprising:
a heat exchanger (40) for generating steam (45) from boiler feed water (41) by indirect heat transfer with the synthesis gas (23), the heat exchanger (40) operatively disposed upstream of the separator (50).

Aspect 23. A process for making ammonia, the process comprising:
(a) separating a first feed gas (71) comprising oxygen and nitrogen in an ion transport membrane assembly (70) comprising an ion transport membrane layer to form a nitrogen product (73) and an oxygen product (75);
(b) separating a second feed gas (11) comprising oxygen and nitrogen in a cryogenic air separation unit (10) to form a second oxygen product (13) and a nitrogen-containing by-product (15);
(c) reacting a carbonaceous material (21) and oxygen under reaction conditions sufficient to produce a synthesis gas (23) comprising H₂, CO₂, CO, and H₂O, wherein the oxygen is provided in an amount less than the stoichiometric amount required for complete combustion of the carbonaceous material, and the oxygen is provided by at least a portion of the oxygen product (75) from the ion transport membrane assembly (70) and at least a portion of the second oxygen product (13) from the cryogenic air separation unit (10);
(d) reacting the CO in at least a portion of the synthesis gas (23) from step (c) with H₂O (31) in the presence of a shift catalyst to produce additional H₂ and CO₂ in the at least a portion of the synthesis gas (23);
(e) separating at least a portion of the synthesis gas (23) from step (d) to form a hydrogen product (51) and a by-product (53) comprising at least CO₂, H₂S, and H₂O; and
(f) reacting at least a portion of the hydrogen product (51) with at least a portion of the nitrogen product (73) from the ion transport membrane assembly (70) under reaction conditions sufficient to produce an ammonia product (63).

Aspect 24. The process of aspect 23 further comprising:
blending at least portion of the hydrogen product (51) from step (e) and at least a portion of the nitrogen product (73) from step (a) to form a blend in a cryogenic wash unit (90), the at least a portion of the hydrogen product (51) and the at least a portion of the nitrogen product (73) blended in a H₂ to N₂ molar ratio ranging from 2.9 to 3.1, and cryogenically washing the blend to form a mixture (95) comprising hydrogen and nitrogen and a second by-product (93) comprising at least CO;
wherein at least a portion of the mixture (95) is the at least a portion of the hydrogen product (51) and the at least a portion of the nitrogen product (73) reacted in step (f).

Aspect 25. A process for producing ammonia, the process comprising:
(i) separating a first feed gas (71) comprising oxygen and nitrogen in an ion transport membrane assembly (70) comprising an ion transport membrane layer to form a nitrogen product (73) and an oxygen product (75);
(ii) separating a second feed gas (11) comprising oxygen and nitrogen in a cryogenic air separation unit (10) to form a second oxygen product (13) and a nitrogen-containing by-product (15);
(iii) reacting a carbonaceous material (21) and oxygen under reaction conditions sufficient to produce a synthesis gas (23) comprising H₂, CO₂, CO, and H₂O, wherein the oxygen is provided in an amount less than the stoichiometric amount required for complete combustion of the carbonaceous material, and the oxygen is provided by at least a portion of the oxygen product (75) from the ion transport membrane assembly (70) and at least a portion of the second oxygen product (13) from the cryogenic air separation unit (10);
(iv) reacting the CO in at least a portion of the synthesis gas (23) from step (iii) with H₂O (31) in the presence of a shift catalyst to produce additional H₂ and CO₂ in the at least a portion of the synthesis gas (23);
(v) separating at least portion of the synthesis gas (23) from step (iv) to form a hydrogen product (51) and a by-product (53) comprising at least CO₂, H₂S, and H₂O;
(vi) blending at least portion of the hydrogen product (51) from step (v) and at least a portion of the nitrogen product (73) from step (a) to form a blend in a cryogenic wash unit (90), the at least a portion of the hydrogen product (51) and the at least a portion of the nitrogen product (73) blended in a H₂ to N₂ molar ratio ranging from 2.9 to 3.1, and cryogenically washing the blend to form a mixture (95) comprising hydrogen and nitrogen and a second by-product (93) comprising at least CO; and
(vii) reacting at least a portion of the mixture (95) under reaction conditions sufficient to produce an ammonia product (63).

Aspect 26. The process of aspect 24 or aspect 25 wherein the second by-product (93) comprises at least one of oxygen, argon, methane, and carbon monoxide.

Aspect 27. The process of any one of aspects 23 to 26 wherein the by-product (53) further comprises CO.

Aspect 28. The process of any one of aspects 23 to 27 wherein the carbonaceous material comprises at least one of coal, petroleum coke, natural gas, municipal waste, wood, and biomass.

Aspect 29. The process of any one of aspects 23 to 28 wherein the carbonaceous material comprises methane.

Aspect 30. The process of any one of aspects 25 to 29 further comprising:
separating at least a portion of the nitrogen product (73) from step (i) to form a nitrogen-rich product (83) and a third by-product (85) comprising at least one of the contaminants in the nitrogen product (73), wherein the at least a portion of the nitrogen product blended in step (vi) comprises at least a portion of the nitrogen-rich product (83).

Aspect 31. The process of any one of aspects 23, 24, and 26 to 29 further comprising:
separating at least a portion of the nitrogen product (73) from step (a) to form a nitrogen-rich product (83) and a third by-product (85) comprising at least one of the contaminants in the nitrogen product (73), wherein the at least a portion of the nitrogen product reacted in step (f) comprises at least a portion of the nitrogen-rich product (83).

Aspect 32. The process of aspect 30 or aspect 31 wherein the at least one of the contaminants in the nitrogen product (73) is diatomic oxygen (O₂), and the at least a portion of the nitrogen product (73) is separated using an adsorbent that is selective for diatomic O₂.

Aspect 33. The process of aspect 30 or aspect 31 wherein the at least one of the contaminants in the nitrogen product (73) is diatomic oxygen, (O₂), and the at least a portion of the nitrogen product (73) is separated using an electrically driven ion transport membrane that is selective for oxygen.

Aspect 34. The process of aspect 30 or aspect 31 wherein the at least one of the contaminants in the nitrogen product (73) is diatomic oxygen, (O₂), and the at least a portion of the nitrogen product (73) is separated using a reactively purged ion transport membrane for removing oxygen from the nitrogen product.

Aspect 35. The process of aspect 30 or aspect 31 wherein the at least one of the contaminants in the nitrogen product (73) is argon, and the at least a portion of the nitrogen product (73) is separated using a cryogenic wash column (90).

Aspect 36. The process of any one of aspects 23 to 35 wherein the nitrogen product (73) from step (a) or step (i) comprises diatomic oxygen, the process further comprising:
reacting the diatomic oxygen with a fuel (101) in a combustor (100) thereby reducing the concentration of the diatomic oxygen in the nitrogen product (73).

Aspect 37. The process of aspect 36 wherein the diatomic oxygen is reacted with the fuel in the presence of a catalyst that promotes combustion of the fuel with the diatomic oxygen.

Aspect 38. The process of aspect 36 or aspect 37 wherein the fuel comprises a portion of the synthesis gas (23), for example, the hydrogen product (51).

Aspect 39. The process of any one of aspects 23 to 38 further comprising:
transferring heat from at least a portion of the synthesis gas (23) from step (c) or step (iii) to boiler feed water (41) in a heat exchanger (40) to form steam (45) by indirect heat transfer prior to separating the at least a portion of the synthesis gas (23).

Aspect 40. The process of any one of aspects 23 to 39, wherein the at least a portion of the oxygen product (75) from the ion transport membrane assembly (70) is compressed in a compressor (77), and the gasifier (20) is operatively disposed to receive the at least a portion of the compressed oxygen product (75) from the compressor (77).

Aspect 41. The system of any one of aspects 1 to 22 further comprising a compressor (77) for compressing the at least a portion of the first oxygen product (75), wherein the gasifier (20) is operatively disposed to receive the at least a portion of the compressed first oxygen product (75) from the compressor (77).

### BRIEF DESCRIPTION OF SEVERAL VIEWS OF THE DRAWINGS

FIG. 1 is a flow diagram showing a system for ammonia production according to the invention.
FIG. 2 is a flow diagram showing a system for ammonia production according to the invention.
FIG. 3 is a schematic of the cryogenic wash unit.

### DETAILED DESCRIPTION

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used. The adjective "any" means one, some, or all indiscriminately of whatever quantity. The term "and/or" placed between a first entity and a second entity means one of (1) the first entity, (2) the second entity, and (3) the first entity and the second entity. The term "and/or" placed between the last two entities of a list of 3 or more entities means at least one of the entities in the list including any specific combination of entities in this list.

The phrase "at least a portion" means "a portion or all." The at least a portion of a stream may have the same composition as the stream from which it is derived. The at least a portion of a stream may have a different composition to that of the stream from which it is derived. The at least a portion of a stream may include specific components of the stream from which it is derived.

As used herein a "divided portion" of a stream is a portion having the same chemical composition and component concentrations as the stream from which it was taken.

As used herein, "first," "second," "third," etc. are used to distinguish from among a plurality of steps and/or features, and is not indicative of the total number, or relative position in time and/or space unless expressly stated as such.

In order to aid in describing the invention, directional terms may be used in the specification and claims to describe portions of the present invention (e.g., upper, top, lower, bottom, left, right, etc.). These directional terms are merely intended to assist in describing and claiming the invention and are not intended to limit the invention in any way. In addition, reference numerals that are introduced in the specification in association with a drawing figure may be repeated in one or more subsequent figures without additional description in the specification in order to provide context for other features.

In the claims, letters or roman numerals may be used to identify claimed steps (e.g. (a), (b), and (c) or (i), (ii), (iii)). These letters or numerals are used to aid in referring to the method steps and are not intended to indicate the order in which claimed steps are performed, unless and only to the extent that such order is specifically recited in the claims.

The term "depleted" means having a lesser mole % concentration of the indicated gas than the original stream from which it was formed. "Depleted" does not mean that the stream is completely lacking the indicated gas.

The terms "rich" or "enriched" means having a greater mole % concentration of the indicated gas than the original stream from which it was formed.

"Downstream" and "upstream" refer to the intended flow direction of the process fluid transferred. If the intended flow direction of the process fluid is from the first device to the second device, the second device is in downstream fluid flow communication with the first device. In case of a recycle stream, downstream and upstream refer to the first pass of the process fluid.

Unless otherwise indicated, all pressure values and ranges refer to absolute pressure.

The present invention relates to a system and process for producing ammonia.

The system and process for producing ammonia will be described with reference to the figures.

The system for producing ammonia comprises an ion transport membrane assembly 70. The ion transport membrane assembly 70 comprises an ion transport membrane layer and has an inlet for introducing a feed gas 71 comprising oxygen and nitrogen into the ion transport membrane assembly 70, a first outlet for withdrawing a nitrogen product 73 from the ion transport membrane assembly 70, and a second outlet for withdrawing a oxygen product 75 from the ion transport membrane assembly 70. The feed gas 71 is typically heated compressed air. Feed gas 71 may be heated by indirect or direct heat transfer. Heating by direct heat transfer may be accomplished, for example, by combusting a gaseous fuel with a large excess of air, thereby forming feed gas 71.

The process for producing ammonia comprises separating the first feed gas 71 comprising oxygen and nitrogen in the ion transport membrane assembly 70 to form the nitrogen product 73 and the oxygen product 75.

An ion transport membrane layer is an active layer of ceramic membrane material comprising mixed metal oxides capable of transporting or permeating oxygen ions at elevated temperatures. The ion transport membrane layer also may transport electrons as well as oxygen ions, and this type of ion transport membrane layer typically is described as a mixed conductor membrane layer. The ion transport membrane layer also may include one or more elemental metals thereby forming a composite membrane.

The membrane layer, being very thin, is typically supported by a porous layer support structure and/or a ribbed support structure. The support structure is generally made of the same material (i.e. it has the same chemical composition), so as to avoid thermal expansion mismatch. However, the support structure might comprise a different chemical composition than the membrane layer.

A membrane unit, also called a membrane structure, comprises a feed zone, an oxygen product zone, and a membrane layer disposed between the feed zone and the oxygen product zone. An oxygen-containing gas is passed to the feed zone and contacts one side of the membrane layer, oxygen is transported through the membrane layer, and an oxygen-depleted gas is withdrawn from the feed zone. An oxygen gas product, which may contain at least 99.0 volume % oxygen, is withdrawn from the oxygen product zone of the membrane unit. The membrane unit may have any configuration known in the art. When the membrane unit has a planar configuration, it is typically called a "wafer."

A membrane module, sometimes called a "membrane stack," comprises a plurality of membrane units. Membrane modules in the present ion transport membrane assembly 70 may have any configuration known in the art.

An "ion transport membrane assembly," also called an "ion transport membrane system," comprises one or more membrane modules, a pressure vessel containing the one or more membrane modules, and any additional components necessary to introduce one or more feed streams and to withdraw two or more effluent streams formed from the one or more feed streams. The additional components may comprise flow containment duct(s), insulation, manifolds, etc. as is known in the art. When two or more membrane modules are used, the two or more membrane modules in an ion transport membrane assembly may be arranged in parallel and/or in series.

Exemplary ion transport membrane layers, membrane units, membrane modules, and ion transport membrane assemblies (systems) are described in U.S. Patents 5,881,373 and 7,179,323.

The ion transport membrane assembly may be operated by introducing a feed gas 71 comprising oxygen and nitrogen. The feed gas 71 may have a temperature ranging from 750°C to 950°C and/or a pressure ranging from 0.6 MPa to 4.2 MPa into the ion transport membrane assembly 70. The feed gas may be any oxygen- and nitrogen-containing gas known for use with ion transport membrane assemblies. The feed gas may be, for example, air, oxygen-depleted air, or oxygen-enriched air. The feed gas 71 may be exhaust from a combustor which is operated fuel lean (and therefore has oxygen in excess of that required to combust all the fuel).

The oxygen in the feed gas 71 is transported through one or more membrane units to form a nitrogen product 73 on the feed side of the one or more membrane units and an oxygen product 75 on the product side of the one or more membrane units. The process comprises withdrawing the nitrogen product 73 from the ion transport membrane assembly 70, and withdrawing an oxygen product 75 from the ion transport membrane assembly 70 to provide at least a portion of the overall oxygen product needed for the gasifier 20. The nitrogen product 73 is withdrawn at substantially the same pressure as the feed gas 71. The nitrogen product 73 is at a slightly lower pressure due to pressure drops inherent to fluid flow through piping, heat exchangers, membrane modules, and so forth. Preferably, the overall pressure drop is limited to less than 700 kPa. Preferably, the overall pressure drop is small enough that the pressure of the nitrogen product 73 at the outlet is at least 70% the pressure of the feed gas 71 at the inlet of the ion transport membrane assembly 70. The process may be operated so that the oxygen product 75 is withdrawn at a pressure ranging from about 20 kPa to about 172 kPa, prior to any cooling and recompression steps to the final use pressure in the gasifier 20. The oxygen product 75 may be compressed in compressor 77.

While all the oxygen requirement of the gasifier 20 may be met with the ion transport membrane assembly 70, this would result in a large excess of high pressure N₂ product stream 73, with much more N₂ than is stoichiometrically required for ammonia production. One cannot afford to "waste" the pressure energy inherent in this excess N₂ stream-thus it is a benefit of this invention to minimize, and indeed, eliminate this excess nitrogen produced by the ion transport membrane assembly 70. Simply cutting out this excess by downsizing the ion transport membrane assembly 70 to meet the N₂ demand would starve the gasifier 20 of oxygen.

In the present invention, the unfulfilled portion of the gasifier oxygen requirement is met with the cryogenic air separation unit 10. The system comprises a cryogenic air separation unit 10 for producing a second oxygen product 13 and a nitrogen-containing by-product 15. Cryogenic air separation units are known in the industry. As used herein, a cryogenic air separation unit is any air separation plant using distillation to form an oxygen product (for example, a product having greater than 95 mole % O₂ or greater than 99.5 mole % O₂) and optionally a nitrogen product and/or an argon product.

The process comprises separating a second feed gas 11 comprising oxygen and nitrogen in the cryogenic air separation unit 10 to form the second oxygen product 13 and the nitrogen-containing by-product 15.

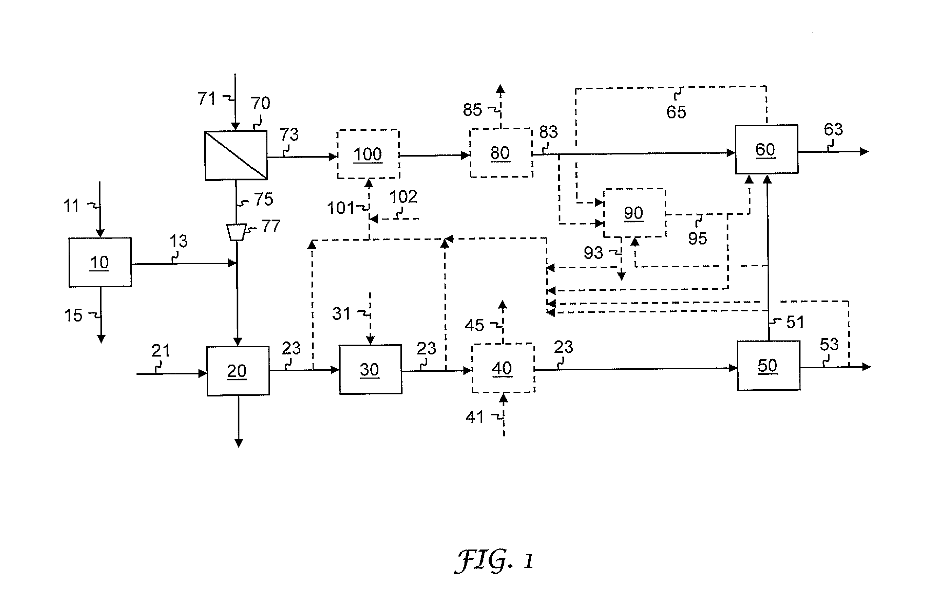

As shown in FIG. 1, a second feed gas 11, typically air, is introduced into cryogenic air separation unit 10 to form an oxygen product 13 and a nitrogen-containing by-product 15. The second feed gas 11 (e.g. air) may be compressed, filtered, dried, and cooled to be distilled at cryogenic temperatures as is known in the art.

The first feed gas 71 to the ion transport membrane assembly may be the same composition as the second feed gas 11 to the cryogenic air separation unit 10. The first feed gas 71 to the ion transport membrane assembly may be a different composition than the second feed gas 11 to the cryogenic air separation unit 10.

The system comprises a gasifier 20. The gasifier 20 is operatively disposed to receive at least a portion of the oxygen product 75 from the ion transport membrane assembly 70 and at least a portion of the second oxygen product 13 from the cryogenic air separation unit 10. A carbonaceous material 21 is introduced into and reacted in the gasifier 20 with a substoichiometric amount of oxygen, where the oxygen is provided by the at least a portion of the oxygen product 75 from the ion transport membrane and the at least a portion of the second oxygen product 13 from the cryogenic air separation unit 10 to produce a synthesis gas 23 comprising H₂, CO₂, CO, and H₂O. Optionally a temperature moderator, such as steam, carbon dioxide, and/or nitrogen may be introduced into the gasifier 20 as well.

The process comprises reacting the carbonaceous material 21 and oxygen under reaction conditions sufficient to produce a synthesis gas 23 comprising H₂, CO₂, CO, and H₂O. The oxygen is provided in an amount less than the stoichiometric amount required for complete combustion of the carbonaceous material, and the oxygen is provided by at least a portion of the oxygen product 75 from the ion transport membrane assembly 70 and at least a portion of the second oxygen product 13 from the cryogenic air separation unit 10.

The precise manner in which oxygen and carbonaceous material 21 are introduced into the gasifier is within the skill of the art. Oxygen product 13 and oxygen product 75 may be blended and introduced into gasifier 20 or introduced separately into gasifier 20. The cryogenic air separation unit 10, the ion transport membrane assembly 70, and the gasifier 20 may be separate devices operatively connected by pipes or other fluid-tight fluid conveyance means. The ion transport membranes of the ion transport membrane assembly 70 may be outside and separate from the gasifier 20. Since the ion transport membrane material is a mixed conducting material, the oxygen produced therefrom will, in general, be at a lower pressure than required by the gasifier 20. Therefore, a compressor 77 may be required. As shown in FIG. 1, the compressor 77 is operatively connected to the ion transport membrane assembly 70 to increase the pressure of the oxygen product from the ion transport membrane assembly 70 before the oxygen is passed to the gasifier 20. The compressor 77 may operate at a near ambient temperature thereby preventing integration of the ion transport membrane assembly 70, compressor 77, and gasifier 20. The raw syngas 23 may comprise other impurities such as, for example, hydrogen sulfide, carbonyl sulfide, methane, ammonia, hydrogen cyanide, hydrogen chloride, mercury, arsenic, and other metals, depending on the carbonaceous material source and gasifier type. In addition to a gasifier, the present system may comprise water-gas shift reactors, high temperature gas cooling equipment, quenching and scrubbing equipment, ash/slag handling equipment, carbon dioxide, sulfur and acid gas removal sections, gas filters, and scrubbers.

The term "carbonaceous" is used herein to describe various suitable feedstocks that contain carbon and is intended to include gaseous, liquid, and solid hydrocarbons, hydrocarbonaceous materials, and mixtures thereof. Substantially any combustible carbon-containing organic material, or slurries thereof, may be included within the definition of the term "carbonaceous". Solid, gaseous, and liquid feeds may be mixed and used simultaneously; and these may include paraffinic, olefinic, acetylenic, naphthenic, and aromatic compounds in any proportion. Also included within the definition of the term "carbonaceous" are oxygenated carbonaceous organic materials including carbohydrates, cellulosic materials, aldehydes, organic acids, alcohols, ketones, oxygenated fuel oil, waste liquids and by-products from chemical processes containing oxygenated carbonaceous organic materials, and mixtures thereof. Coal, petroleum-based feedstocks including petroleum coke and other carbonaceous materials, waste hydrocarbons, residual oils, and by-products from heavy crude oil are commonly used for gasification reactions. Municipal waste, wood, and biomass may also be used for the gasification reactions. When the feedstock is a gas, such natural gas, or a low boiling fluid, such as naptha, the gasifier is often referred to as a "partial oxidation" or "POX" unit. Also, in many of these cases, the gasifier can have a reforming catalyst in which the gasifier may be referred to as an "autothermal reformer" or ATR.

Any one of several known gasifiers, capable of utilizing or requiring substantially oxygen-rich gas as the oxidant, can be incorporated into the system of the instant invention. These gasification processes generally fall into broad categories such as, for example, as laid out in Chapter 5 of "Gasification", (C. Higman and M. van der Burgt, Elsevier, 2003). Examples are moving bed gasifiers such as the Lurgi dry ash process, the British Gas/Lurgi slagging gasifier, the Ruhr 100 gasifier; fluid-bed gasifiers such as the Winkler and high temperature Winkler processes, the Kellogg Brown and Root (KBR) transport gasifier, the Lurgi circulating fluid bed gasifier, the U-Gas agglomerating fluid bed process, and the Kellogg Rust Westinghouse agglomerating fluid bed process; and entrained-flow gasifiers such as the Texaco, Shell, Prenflo, Noell, E-Gas (or Destec), CCP, Eagle, Koppers Totzek processes. Not all gasifiers are capable of operating with oxygen as the oxidant - some can only use air. Gasifiers using air without oxygen enrichment do not form a part of this invention. Some gasifiers operate with the carbonaceous material fed in wet slurry form, like the Texaco, now GE (General Electric) or ECUST (East China University) gasifiers. Alternatively, carbonaceous material may be fed to the gasifier dry, as is done in the Shell, Siemens and HTL gasifiers. The gasifiers contemplated for use in the system may be operated over a range of pressures and temperatures between about 0.1 to 10.4 MPa absolute and 400°C to 2000°C. Typically, the high-pressure gasifier has a pressure operating range of 2.2 to 8.4 MPa. Temperatures at the exit of the gasifier typically are in the range of about 900°C to 1700°C, and more typically in the range of about 1100°C to about 1500°C.

Depending on the carbonaceous feedstock used in the gasifier and type of gasifier utilized to generate the gaseous carbon monoxide, carbon dioxide, and hydrogen, preparation of the feedstock may comprise grinding, and one or more unit operations of drying, slurrying the ground feedstock in a suitable fluid (e.g., water, organic liquids, supercritical or liquid carbon dioxide). The carbonaceous fuels are reacted with a reactive oxygen-rich gas, such as substantially pure oxygen having greater than about 90 mole percent oxygen.

The system comprises a shift reactor 30 operatively disposed to receive at least a portion of the synthesis gas 23 from the gasifier 20. CO in the at least a portion of the synthesis gas is reacted with H₂O in the shift reactor 30 in the presence of a shift catalyst to produce additional H₂ and CO₂ in the at least a portion of the synthesis gas 23. The H₂O reacted with the CO may be present in the at least a portion of the synthesis gas, and, optionally, provided in a supplementary steam stream 31. The "CO shift" reaction is also referred to as "water-gas shift" reaction.

The process comprises reacting the CO in at least a portion of the synthesis gas 23 from the gasifier 20 with H₂O in the presence of a shift catalyst to produce additional H₂ and CO₂ in the at least a portion of the synthesis gas 23.

The shift reactor 30 may comprise one or more process units, such as reactors, condensers, heat exchangers, etc. The H₂O reacted with the CO in the shift reactor 30 may already be present in the synthesis gas 23 by prior introduction into other equipment such as quenchers and scrubbers that are either integral to the gasifier, or are downstream of the gasifier and upstream of the shift reactor 30. Alternately, water or steam may be introduced via a separate stream 31. The CO in the synthesis gas is reacted with water (typically as steam) in the presence of a suitable catalyst to convert CO and H₂O to CO₂ and additional H₂ by way of the CO shift reaction. The synthesis gas 23 from the shift reactor 30 may contain 4 to 50 mole percent CO₂, which needs to be separated from the H₂ in the synthesis gas 23.

The CO shift reaction may be accomplished over a catalyst using known shift catalyst by methods known in the art. Because of the presence of sulfur-compounds in the synthesis gas from most carbonaceous materials except for certain gaseous feedstocks, a "sulfur-tolerant" or "sour-shift" catalyst may be employed. One example of a sour-shift catalyst is cobalt-molybdenum sulfide as the active material, on suitable supports. These catalysts are commercial and well-known. For cases where the sulfur-compounds are sufficiently low in concentration (such as would be the case with natural gas feed stocks or feedstock desulfurized prior to gasification), a "sweet" shift catalyst such as iron-chrome catalyst may be used.

Because of the highly exothermic nature of the CO shift reaction, steam may be generated by recovering heat from the synthesis gas 23 exiting the shift reactor 30. The CO shift reaction may be conducted in any reactor format known in the art for controlling the heat release of exothermic reactions. Examples of suitable reactor formats are single stage adiabatic fixed bed reactors, multiple-stage adiabatic fixed bed reactors with interstage cooling, steam generation or coldshotting, tubular fixed bed reactors with steam generation or cooling, or fluidized beds.

The shift reactor 30 can generate high pressure steam at various pressures and degrees of superheat. The term "high pressure", as used herein, is understood to mean a pressure of about 2.2 MPa or greater. Examples of saturated steam pressures which can be generated by the shift reaction section 30 are about 2.2 MPa to about 6.3 MPa. For example, 4.2 MPa saturated steam can be generated from the CO shift section 30. This 4.2 MPa saturated steam provides flexibility and efficient integration into the ammonia steam system.

The system also comprises a separator 50 operatively disposed to receive at least a portion of the synthesis gas 23 from the shift reactor 30. The at least a portion of the synthesis gas 23 is separated to form a hydrogen product 51 and a by-product 53 containing at least CO₂, and H₂O and, depending on the feedstock, H₂S.

The process comprises separating at least portion of the synthesis gas 23 from the shift reactor 30 to form a hydrogen product 51 and a by-product 53 comprising at least CO₂, and H₂O and, depending on the feedstock, H₂S.

The carbon dioxide may be removed from the synthesis gas 23 by any of a number of methods known in the art for removal of carbon dioxide from gaseous streams at any of the pressures contemplated for the process. For example, the carbon dioxide may be removed by chemical absorption methods, exemplified by using aqueous caustic soda, potassium carbonate or other inorganic bases, or alkanol amines. These methods may be carried out contacting the synthesis gas 23 with a liquid absorption medium in any suitable liquid-gas contactor known to the art such as, for example, a column containing trays or packing. Examples of suitable alkanolamines for the present invention include primary and secondary amino alcohols containing a total of up to 10 carbon atoms and having a normal boiling point of less than about 250°C. Specific examples are listed in US 2006/0228284 A1.

Alternatively, carbon dioxide in the synthesis gas 23 may be removed in separator 50 by physical absorption methods. Examples of suitable physical absorbent solvents are methanol ("Rectisol™") and other alkanols, propylene carbonate and other alkyl carbonates, dimethyl ethers of polyethylene glycol of two to twelve glycol units and mixtures therein, commonly known under the trade name of Selexol™ solvents, n-methyl-pyrrolidone ("Purisol™); and sulfolane ("Sulfinor™"). Physical and chemical absorption methods may be used in combination as exemplified by the Sulfinol™ process using sulfolane and an alkanolamine as the absorbent, or the Amisol™ process using a mixture of mono-ethanolamine and methanol as the absorbent. Other examples of established carbon dioxide removal processes include "Amine Guard™", "Benfield™", "Benfield-DEA™", "Vetrocoke™" and "Catacarb™".

Sulfur, usually in the form of sulfur-containing compounds such as, for example hydrogen sulfide, and other acid gases present in the syngas in addition to carbon dioxide also may be removed in separator 50 by methods and systems well known in the art. For example, sulfurous compounds may be recovered from the syngas in a sulfur removal zone by chemical absorption methods, exemplified by using caustic soda, potassium carbonate or other inorganic bases, or alkanol amines. Examples of suitable alkanolamines for the present invention include primary and secondary amino alcohols containing a total of up to 10 carbon atoms and having a normal boiling point of less than about 250°C. Specific examples include primary amino alcohols such as mono ethanolamine (MEA), and others as listed in US 2006/0228284 A1.

Alternatively, sulfurous compounds may be removed in separator 50 by physical absorption systems and methods. Examples of suitable physical absorbent solvents are methanol and other alkanols, propylene carbonate, and other alkyl carbonates, dimethyl ethers of polyethylene glycol of two to twelve glycol units and mixtures therein, commonly known under the trade name of Selexol™ solvents, n-methyl-pyrrolidone, and sulfolane. Physical and chemical absorption methods may be used in combination as exemplified by the Sulfinol™ process using sulfolane and an alkanolamine as the absorbent, or the Amisol™ process using a mixture of monoethanolamine and methanol as the absorbent. Typically, the synthesis gas is contacted with the solvent in a gas-liquid contactor which may be of any type known to the art, including packed columns or a column having trays. Operation of such an acid removal contactor is known in the art.

The sulfurous compounds in the syngas 23 also may be removed in separator 50 by solid sorption methods using fixed, fluidized, or moving beds of solids exemplified by zinc titanate, zinc ferrite, tin oxide, zinc oxide, iron oxide, copper oxide, cerium oxide, or mixtures thereof. The sulfur removal equipment may be preceded by one or more gas cooling steps to reduce the temperature of the syngas as required by the particular sulfur removal technology utilized therein. Sensible heat energy from the syngas may be recovered through steam generation in the cooling train by means known in the art. Typically at least 90%, more typically at least 98% of the sulfur in the feed gas can be removed by the sulfur removal systems and methods described hereinabove.

The solvent-based acid-gas removal systems described above are very good at removing substantially all the sulfurous compounds and CO₂ from the syngas. Other means may need to be employed to remove residual amounts of CO₂, CO and H₂O, as these oxygenates will poison the ammonia synthesis catalyst. One classical method to remove CO₂ and CO is methanation. In this case, the synthesis gas is heated to about 300°C and passed into a methanator. The methanator is a reactor packed with a Ni-rich methanation catalyst. CO and CO₂ react with the excess of H₂ to make CH₄ and H₂O. The water is knocked out through condensation, and the synthesis gas is dried in a drier packed with a desiccant. The effluent 51 from the drier, which may be the downstream most component of the separator 50, is principally H₂ with minor amounts of CH₄, N₂ and Ar. The CH₄ does not poison the NH₃ synthesis catalyst.

Separator 50 may comprise of one or more adsorbers. The adsorbers can be packed with various adsorbents that selectively adsorb one or more of the contaminants H₂O (assuming the functionality of a drier), CO (assuming the functionality of CO removal in lieu of a methanator), CO₂ (assuming the functionality of CO₂ removal in lieu of a methanator and the solvent based system), and H₂S (assuming the functionality of the acid gas removal system). These sorbents, which can be one or more of synthesized or naturally occurring zeolites, aluminas, and activated carbons, are well known.

The by-product 53 formed from the separator 50 may further comprise CO.

The system also comprises an ammonia synthesis unit 60 operatively disposed to receive at least a portion of the hydrogen product 51 from the separator 50 and operatively disposed to receive at least a portion of the nitrogen product 73 from the ion transport membrane assembly 70. The at least a portion of the hydrogen product 51 is reacted with the at least a portion of the nitrogen product 73 in said ammonia synthesis unit 60 to produce an ammonia product 63.

The process comprises reacting at least a portion of the hydrogen product 51 with at least a portion of the nitrogen product 73 from the ion transport membrane assembly 70 under reaction conditions sufficient to produce the ammonia product 63. The reaction conditions sufficient to produce the ammonia product 63 comprise a pressure ranging from 1.5 MPa to 35 MPa and a temperature ranging from 300°C to 550°C.

The ammonia synthesis unit 60 comprises an ammonia synthesis reactor and associated component separators for purification of the ammonia.

The hydrogen product 51 is passed from the separator 50 as a feed to the ammonia synthesis unit 60 for making ammonia 63. Typically, the hydrogen product 51 is a high pressure gas stream having a pressure of about 2 to 7 MPa.

The at least a portion of the nitrogen product 73 and the at least a portion of the hydrogen product 51 may be introduced to the ammonia synthesis unit 60 generally by way of an ammonia make-up feed (MUF) compressor. Ammonia synthesis units operate at elevated pressure. If the at least a portion of the nitrogen product 73 and the at least a portion of the hydrogen product 51 are at about the same pressure, it may be advantageous to combine the two streams prior to compression. Alternatively, they can be compressed separately. In another alternative, one of them may be compressed in a first stage of compression and then combined with the other stream for combined compression. The hydrogen and nitrogen reactants are provided in the molar ratio of between about 2.7:1 to about 3.2:1, more typically between about 2.8:1 to about 3.1:1, and most typically between about 2.9:1 to about 3.0:1.

Typically, in conventional ammonia plants, pressures of between about 1.5 MPa and about 34.6 MPa are used. More typically, the pressures are between about 4.2 MPa and about 34.6 MPa, and most typically, between about 5.6 MPa and about 16.7 MPa. The ammonia synthesis feedstock gas is passed over an ammonia synthesis catalyst which catalyzes the hydrogenation of nitrogen to ammonia. The catalyst can be contained in one or more tubular or bed reactors, and these reactors may be set up in a series of one or more reactors. In such cases, there may be provisions for cooling the gas between ammonia synthesis units. The ammonia synthesis catalyst may be any type known in the industry for the synthesis of ammonia such as, for example, as described in U.S. Pat. No. 5,846,507.

An ammonia product 63 is recovered from the ammonia synthesis unit 60. Unreacted H₂ and N₂ from the ammonia synthesis reactor is compressed and recycled back to the ammonia synthesis reactor. Recovery of the ammonia product 63 is generally by condensation, though any method known in the art, including water or solvent scrubbing, may be used. Condensation may be assisted by expanding the gas, or by cooling with refrigeration, cooling water or liquid nitrogen from the cryogenic air separation unit 10.

A common technique to separate NH₃, thereby forming the ammonia product 63, from unreacted N₂ and H₂ to form the recycle stream, is to use a refrigeration cycle that uses NH₃ in a closed or open loop as the refrigerant. The refrigeration cycle uses the well-known operations of compression, cooling-condensation, expansion valve, and evaporation.

A purge stream 65 may be taken from the recycle stream of unreacted H₂ and N₂. A small purge is necessary to control the level of Ar and CH₄ that may build up in the ammonia synthesis loop. The passing of H₂ and N₂ through the ammonia reactor, recovery of ammonia product, and recycle of the unreacted H₂ and N₃ is referred to herein as the ammonia synthesis loop.

The purge stream 65 may optionally be passed to the cryogenic wash unit 90 (discussed below) to remove and reduce the concentration of nonreactive species in the ammonia synthesis gas loop such as argon and/or methane. Optionally, a portion of the purge stream 65 may be used to fuel the combustor 100. Optionally, a portion of the purge stream 65 can be used as a fuel to directly or indirectly heat up the oxidant feed to the ion transport membrane assembly 70.

The ammonia product 63 from the ammonia synthesis unit 60 may be purified further, to remove small dissolved amounts of N₂, H₂ or Ar, by, for example, flashing to successively lower pressures. The ammonia product 63 may be further refrigerated prior to storage or transportation. Refrigeration may be integrated in to the NH₃ purification section of the ammonia synthesis unit 60 by using a portion of the generated NH₃ as working fluid in a closed or open refrigeration loop.

In conventional processes for producing ammonia, the sole source for the N₂ reactant for producing ammonia is a cryogenic air separation unit (ASU). In the present invention, at least substantially all of the N₂ reactant is provided by the ion transport membrane assembly 70 with little or no N₂ reactant provided by the cryogenic air separation unit 10. It has been surprisingly found that sourcing the gasifier oxygen partly from the ion transport membrane assembly 70 and partly from the cryogenic air separation unit 10, while simultaneously sourcing all or at least most of the N₂ for the ammonia synthesis unit 60 from the ion transport membrane assembly retentate 73, saves power consumption, compared to the traditional method of sourcing all the gasifier O₂ and N₂ for ammonia from cryogenic air separation unit alone.

The nitrogen product 73 from the ion transport membrane assembly 70 may contain a residual concentration of less than 10 volume % oxygen, and preferably less than 5 volume % oxygen, and more preferably less than 2 volume % oxygen. In addition, the nitrogen product 73 from the ion transport membrane assembly may contain moisture and CO₂. These impurities may need to be separated from the nitrogen feed used in the ammonia synthesis unit 60, since diatomic oxygen can present an explosion hazard when combined with fuels such as H₂ or NH₃, and since oxygenates can poison the ammonia synthesis catalyst. The nitrogen product 73 may also comprise Ar. While Ar does not harm the ammonia synthesis catalyst, it tends to build up in the ammonia synthesis unit 60, and can therefore eventually decrease the ammonia production rate. Therefore nitrogen product 73 may be passed to a second separator 80 to form a nitrogen-rich product 83, which is essentially free of O₂, CO₂, and H₂O, and optionally has a reduced Ar content.

The system may further comprise a second separator 80 operatively disposed to receive at least a portion of the nitrogen product 73 from the ion transport membrane assembly 70. The at least a portion of the nitrogen product 73 is separated in the second separator 80 to form a nitrogen-rich product 83 and a by-product 85 containing at least one of the contaminants in the nitrogen product 73. The ammonia synthesis unit 60 is operatively disposed to receive the nitrogen-rich product 83 as the at least a portion of the nitrogen product 73 from the ion transport membrane assembly 70.

The process may further comprise separating at least a portion of the nitrogen product 73 from the ion transport membrane assembly 70 to form a nitrogen-rich product 83 and by-product 85 containing at least one of the contaminants in the nitrogen product 73. At least a portion of the nitrogen product reacted in the ammonia synthesis unit 60 comprises at least a portion of the nitrogen-rich product 83.

Residual amounts of diatomic oxygen, moisture (H₂O) and carbon dioxide in the nitrogen product 73 are separated from the nitrogen using any known technology to form the nitrogen-rich product 83 having sufficient purity and quantity for the ammonia synthesis unit 60. The nitrogen-rich product 83 preferably has a concentration of greater than 99 volume % nitrogen.

The second separator 80 may comprise two or more adsorber vessels, filled with adsorbents selective to the sorption of O₂, for example, carbon molecular sieves (CMS).

The second separator 80 may comprise a cryogenic distillation apparatus wherein the N₂ product steam 73 from the ion transport membrane assembly 70 is distilled to separate the oxygen and argon from the nitrogen, thereby yielding a nitrogen-rich product 83 suitable for feeding the ammonia synthesis unit 60.

Alternatively or additionally, the second separator 80 may comprise sorbents such as aluminas or molecular sieves which are very effective in removing any residual CO₂ and H₂O.

The nitrogen-rich product 83 may be passed from the second separator 80 as a feed to the ammonia synthesis unit 60 for making an ammonia product 63. Typically, the nitrogen-rich product 83 is a high pressure gas stream having a pressure of about 2 to 4 MPa. An unexpectedly synergy has been realized between the ion transport membrane assembly 70, gasifier 20, and the ammonia synthesis unit 60 in that using the high pressure nitrogen product 73 from the ion transport membrane assembly 70 as the source of the nitrogen feed to the ammonia synthesis unit avoids substantial compression power compared to more traditional nitrogen feed sources.

By comparison, a cryogenic air separation unit (ASU) could alternatively serve as the source of O₂ to the gasifier 20 and N₂ to the ammonia synthesis unit 60. In this alternative scenario, the N₂ from the cryogenic air separation unit typically has a pressure less than about 0.5 MPa. Since the ammonia synthesis unit operates at very high pressure, typically in the range of between about 5.6 MPa and about 16.7 MPa, using the nitrogen from the cryogenic air separation unit requires a significant amount of compression power to be used in the ammonia synthesis unit.

The system may further comprise a combustor 100 operatively disposed to receive the nitrogen product 73 from the ion transport membrane assembly 70 as shown in FIG. 1. The combustor 100 may be a so-called DeOxo unit. The concentration of the diatomic oxygen in the nitrogen product 73 may be reduced by reacting the diatomic oxygen in the nitrogen product 73 with a fuel 101 in the combustor 100.

The process may further comprise reacting diatomic oxygen in the nitrogen product 73 from the ion transport membrane assembly 70 with fuel 101 in combustor 100 thereby reducing the concentration of the diatomic oxygen in the nitrogen product 73.

The combustor 100 may comprise a catalyst that promotes combustion of the fuel with the diatomic oxygen. The diatomic oxygen is then reacted with the fuel in the presence of the catalyst that promotes combustion of the fuel with the diatomic oxygen. The catalyst may be, for example, a palladium-based catalyst that promotes the combustion of fuels at low temperatures and with small amounts of oxygen.

When the system comprises combustor 100, the oxygen concentration in the nitrogen product 73 is preferably reduced to less than 1 ppm. Catalytic DeOxo reactors are self-initiating above feed concentrations of 1 volume % O₂. The reaction is exothermic, and it may be desirable to control the reaction temperature to certain limits so that the temperature does not exceed the design temperature permitted by reactor metallurgy. Many deOxo catalysts themselves are capable of operation to at least 600°C. The reaction temperature may be controlled, for example, by multiple stages of adiabatic reactors with intervening steam boilers. The combustor 100 (e.g. a deOxo reactor) may be positioned downstream of an O₂-selective adsorption unit as discussed previously. Such an O₂-selective adsorption unit can be provided in addition to or instead of separator 80. The adsorption unit could reduce the oxygen concentration in the nitrogen product 73 to a range of 10 ppm to 1 volume %, and the combustor 100 could polish this gas to less than 1 ppm O₂. In this approach, the temperature rise in the combustor 100 and the fuel used in the combustor is reduced.

The fuel 101 used in the combustor 100, if present, may be any suitable fuel for reacting with the diatomic oxygen in the combustor 100. Fuel may be provided in an amount greater than required to react all of the diatomic oxygen in the nitrogen product 73. The fuel may be natural gas. The fuel may be a portion of the synthesis gas 23.

The combustor 100 may be operatively disposed to receive a portion of the synthesis gas 23 as at least a portion of the fuel 101.

The portion of the synthesis gas 23 introduced into the combustor 100 may be any combustible mixture suitable for reacting with the diatomic oxygen. The portion of the synthesis gas 23 introduced into the combustor 100 may be withdrawn from the system between the gasifier 20 and the shift reactor 30, between the shift reactor 30 and the separator 50, from the separator 50 (the hydrogen product 51 and/or the by-product 53), from the ammonia synthesis unit 60 (i.e. an ammonia synthesis loop gas and/or a by-product stream from the ammonia synthesis unit), from the cryogenic wash unit 90 (i.e. the mixture 95 containing hydrogen and nitrogen and/or the by-product 93 containing at least CO), and/or from a purification section downstream of the ammonia synthesis unit (not shown) (i.e. a by-product stream from the purification section).

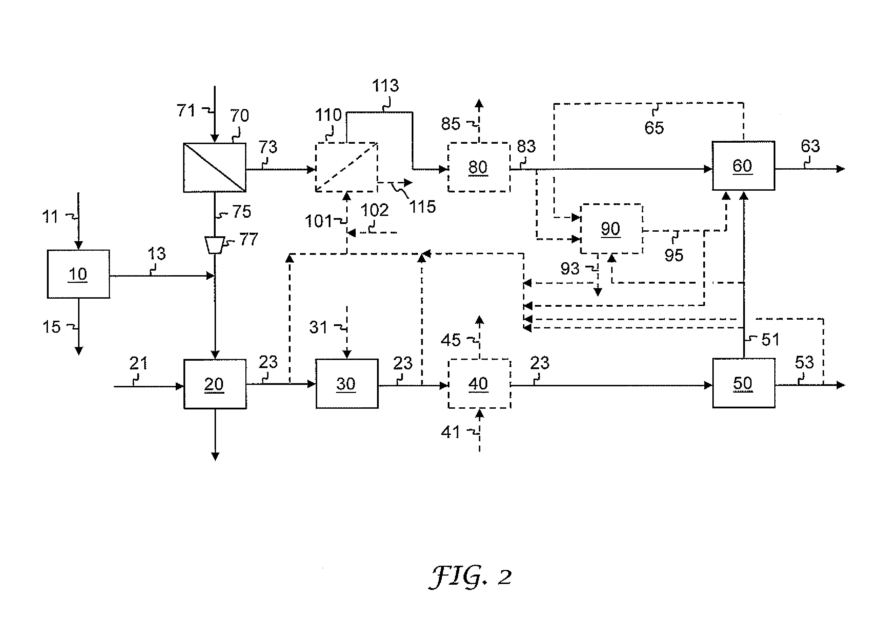

In addition or alternatively to the combustor 100, the system may further comprise a second ion transport membrane assembly 110 as shown in FIG. 2 for separating oxygen from the nitrogen product 73. The structural features (membrane unit, membrane module, membrane layer, etc.) of the second ion transport membrane assembly 110 may be as described for the ion transport membrane assembly 70. The second ion transport membrane assembly 110 may be a reactively purged ion transport separator as described in EP 0 916 385 A1.

The second ion transport membrane assembly 110 comprises an ion transport membrane layer. The second ion transport membrane assembly 110 has an inlet for introducing the nitrogen product 73 from the ion transport membrane assembly 70 comprising oxygen and nitrogen into the second ion transport membrane assembly 110. The second ion transport membrane assembly 110 has a first outlet for withdrawing a nitrogen product 113 from the second ion transport membrane assembly 110, and a second outlet for withdrawing an oxygen product or combustion products 115 from the second ion transport membrane assembly 110. The second ion transport membrane assembly 110 may have a second inlet for introducing a fuel 101 into the second ion transport membrane assembly 110 to react with oxygen that has been transported through the membrane layer thereby forming combustion products 115.

The process may further comprise separating the nitrogen product 73 comprising oxygen and nitrogen in the second ion transport membrane assembly 110 to form an enriched nitrogen product 113 and an oxygen product or combustion product 115. A combustion product 115 may be formed when a fuel 109 is introduced to the anode side of the second ion transport membrane assembly 110. An oxygen product 115 may be formed when no fuel is introduced to the anode side of the second ion transport membrane assembly 110.

The concentration of the diatomic oxygen in the nitrogen product 73 may be reduced by transporting oxygen through the membrane and optionally reacting the diatomic oxygen in the nitrogen product 73 with a fuel 101 on the anode side of the second ion transport membrane assembly 110. The reactively purged second ion transport membrane assembly 110 functions as a deOxo unit which separates the residual oxygen from the nitrogen product 73 by ion transport through the ion transport membrane layer to the anode side where it reacts with the fuel 101 to produce a very low partial oxygen pressure and thereby enhance oxygen removal.

The second ion transport membrane assembly 110 may be operated at a temperature ranging from 700°C to 1000°C and a pressure ranging from 0.11 MPa to 4.2 MPa.

A benefit of using a reactively purged second ion transport membrane assembly 110 instead of the combustor 100 is that CO₂ and H₂O from reaction of the fuel with oxygen in the nitrogen product 73 is separated from the nitrogen and a separate separator for separating CO₂ and H₂O is not required for the reactively purged second ion transport membrane assembly 110.

The second ITM assembly 110 may comprise an electrically driven ion transport membrane, as described in US 5,338,623 and US 5,750,279, for removing at least a portion of any residual oxygen. Such a membrane is useful when no fuel 101 is used. In lieu of fuel, a suitable electric potential applied between the anode side and the cathode side pumps oxygen from the N₂ stream thereby purifying it.

The system may further comprise a cryogenic wash unit 90. The cryogenic wash unit 90 is operatively disposed to receive at least a portion of the hydrogen product 51 from the separator 50 and operatively disposed to receive at least a portion of the nitrogen product 73 from the ion transport membrane assembly 70. The cryogenic wash unit 90 forms a mixture 95 containing hydrogen and nitrogen and a by-product 93 containing at least CO. When the system comprises a cryogenic wash unit 90, the ammonia synthesis unit 60 is operatively disposed to receive at least a portion of the mixture 95 containing hydrogen and nitrogen from the cryogenic wash unit 90 such that the ammonia converter is thereby operatively disposed to receive the at least a portion of the hydrogen product 51 from the separator 50 section and the at least a portion of the nitrogen product 73 from the ion transport membrane assembly 70 via the cryogenic wash unit 90.

The process may further comprise blending at least portion of the hydrogen product 51 from separator 50 and at least a portion of the nitrogen product 73 from the ion transport membrane assembly 70 to form a blend in the cryogenic wash unit 90. The at least a portion of the hydrogen product 51 and the at least a portion of the nitrogen product 73 may be blended in a H₂ to N₂ molar ratio ranging from 2.7 to 3.2. The blend is cryogenically washed in the cryogenic wash unit 90 to form the mixture 95 containing hydrogen and nitrogen and the by-product 93 containing at least CO.

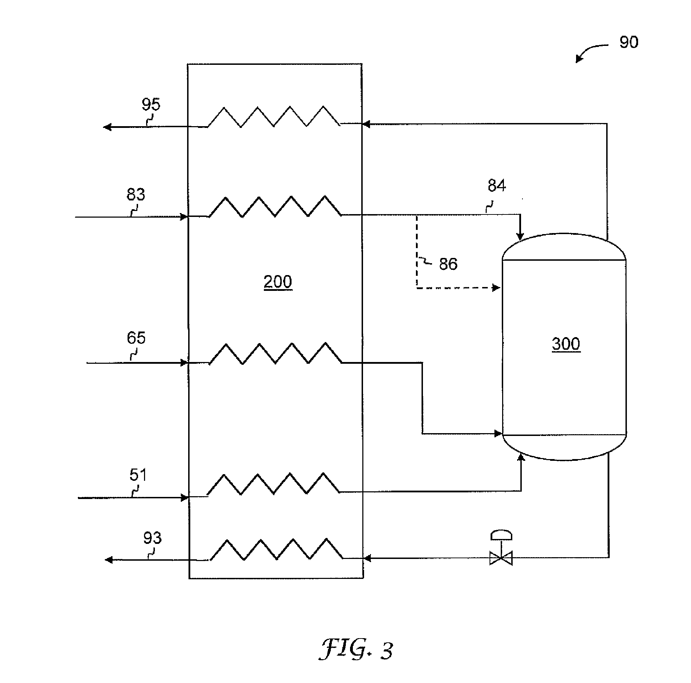

The cryogenic wash unit 90 may comprise a multi-stream heat exchanger 200 and a wash column 300 as shown in FIG. 3.

Cryogenic wash unit 90 may be used in combination with the second separator 80.

The nitrogen-rich product 83 from the second separator 80, from which CO₂, H₂S and H₂O has been removed, is cooled in heat exchanger 200 to a temperature where at least a portion is liquefied. If the pressure is greater than the critical pressure of N₂, the nitrogen-rich product 83 is cooled below the critical temperature of N₂, so that it has a liquid-like density. If the pressure is less than the critical pressure of N₂, the nitrogen-rich product 83 is cooled to a temperature where at least some liquid phase 84 is present. A vapor phase 86 may also be present or the nitrogen-rich product 83 may be cooled to a temperature where the liquid phase 84 is subcooled and no vapor phase is present. The liquid phase 84 may be introduced into a top portion of a wash column 300 to provide a washing reflux to the wash column 300. The vapor portion 86, if present, may be introduced into the wash column 300 at a location below the location where the liquid phase 84 is introduced.

Preferably, O₂ is also removed from the nitrogen-rich product 83, for example using the combustor 100. While a small amount of oxygen, for example, less than 100 ppm oxygen may be tolerated in the feed to the cryogenic wash unit 90, the nitrogen-rich product 83 must not contain so much oxygen so as to present an explosion hazard in the wash column 300. Preferably, less than 1 ppm oxygen is present in the nitrogen-rich product 83. Even small amounts of oxygen can concentrate in the bottom of the wash column by a factor of ten or more. Typically, the nitrogen-rich product 83 will comprise small amounts of argon.

Hydrogen product 51 from separator 50, from which CO₂, H₂O and solvents have been removed, is also cooled in heat exchanger 200 to a temperature above which the hydrogen product 51 condenses and is introduced into a bottom portion of wash column 300 as a superheated vapor stream 251. The hydrogen product 51 may comprise CO, which can harm the ammonia synthesis catalyst. The hydrogen product 51 may also comprise CH₄ and argon, which are inert with respect to the ammonia synthesis catalyst.

A purge stream 65 comprising N₂, H₂ and Ar from the ammonia synthesis unit 60 may also be cooled in heat exchanger 200 and introduced into the bottom portion of the wash column 300. The purge stream 65 must be scrubbed of NH₃ and completely freed of NH₃ and H₂O prior to being cooled in heat exchanger 200 to prevent freezing problems. The purge stream 65 has essentially no NH₃ and no H₂O.

Wash column 300 is operated according to the well-known principles of two-phase multistage fractionation. A mixture 95 is withdrawn as an overhead vapor from column 300, the mixture having a H₂ to N₂ molar ratio of about 3 to 1. The mixture 95 is substantially free of CO, preferably less than 10 ppm CO and more preferably less than 1 ppm CO. The mixture 95 is free of O₂ and may contain small amounts of Ar and CH₄.

The mixture 95 is heated in heat exchanger 200, thereby providing most of the cooling duty, compressed, and passed to the ammonia synthesis unit 60.

Substantially all of the CO, all of the O₂ (if any), and at least some of the Ar and CH₄ are withdrawn as a liquid from the bottom of the wash column 300 as by-product 93. The liquid by-product 93 may be flash evaporated through a valve to a lower pressure and passed to heat exchanger 200 thereby providing a portion of the cooling duty in heat exchanger 200. By-product 93 is essentially a weak fuel and may be vented, flared, or used as a fuel in the facility.

The system may further comprise a heat exchanger 40. Steam 45 may be generated in the heat exchanger 40 by transferring heat by indirect heat transfer between the synthesis gas 23 and boiler feed water 41. The heat exchanger 40 is operatively disposed downstream of the shift reactor 30 to receive synthesis gas 23 from the shift reactor 30. The heat exchanger 40 is operatively disposed upstream of the separator 50 so that separator 50 receives synthesis gas 23 from optional heat exchanger 40.

The process may further comprise transferring heat from at least a portion of the synthesis gas 23 from gasifier 20 to boiler feed water 41 in heat exchanger 40 to form steam 45 by indirect heat transfer prior to separating the at least a portion of the synthesis gas 23 in separator 50.

The present system for producing ammonia may be used for new, "greenfield" ammonia/gasification plants or may be applied to existing ammonia plants that are retrofitted with a gasifier as a source of high pressure hydrogen and an ion transport membrane assembly as a source of oxygen and high pressure nitrogen. For example, the ammonia synthesis loop of a typical natural gas-based ammonia plant may be modified by replacing the existing steam expansion turbine drivers and compressors designed to take advantage of the steam integration between the gasification and ammonia systems. Thus, in one embodiment, the invention further comprises replacing existing steam turbine drivers and compressors for compressing hydrogen and nitrogen feedstock in an ammonia-making process with one steam turbine driver and one compressor comprising a single casing.

### Example 1

About 7050 metric tons per day of coal 21 is fed to the gasifier 20. The gasifier effluent 23, after suitable treatment, provides sufficient hydrogen to produce about 5000 metric tons per day of ammonia 63. Suitable treatment includes removal of particulates and other contaminants in the synthesis gas effluent 23, as well as sour shifting to shift CO into additional H₂, in shift reactor 30, acid gas removal to remove H₂S and CO₂, and drying to remove the last traces of CO₂ and H₂O in separator 50. In this example, all of the hydrogen product 51 is passed to cryogenic wash unit 90 to remove CO and blended with N₂ prior to passing to ammonia converter 60.

Air 71 is heated and compressed to about 3.6 MPa and fed to the ion transport membrane assembly 70 to produce about 1365 metric tons per day of oxygen, which is about 25% of the oxygen requirement for the gasifier 20. The ion transport membrane assembly retentate is a nitrogen-rich nitrogen product 73 and is substantially at high pressure. The nitrogen product 73 has a residual O₂ content of about 2%. The nitrogen product 73 is passed to combustor 100 (i.e. a deOxo unit), where the O₂ concentration is reduced to trace levels by combustion with fuel 101.

The nitrogen-rich stream is purified in separator 80 to remove CO₂ and H₂O, and form nitrogen-rich product 83. Nitrogen-enriched product 83 is liquefied in cryogenic wash unit 90, and serves to wash out CO from the hydrogen product 51 in column 300, while simultaneously forming a H₂:N2 mixture 95 of about 3:1, with a CO content <1 ppm.

The mixture 95 is compressed to the ammonia converter pressure of about 16 MPa, and introduced as make-up feed to the ammonia synthesis loop in the ammonia converter 60. The make-up feed mixes with the recycled reactant gases in the synthesis gas loop and is passed to the ammonia synthesis reactor within the ammonia converter 60. N₂ and H₂ react to form a gas of about 18 mole % ammonia and unreacted reactant gases. The mixture of ammonia and unreacted N₂ and H₂ is cooled and chilled to about 0°C so most of the NH₃ is condensed and removed from the ammonia synthesis loop for further processing. The residual gases, still containing about 4.6 mole % NH₃ is recycled in the ammonia synthesis loop.

A small purge stream 65 (about 0.8% of the molar flow rate of the gases in the ammonia synthesis loop) is extracted from the ammonia synthesis loop so that the level of Ar is controlled to between 4 and 5 mole % in the ammonia synthesis loop. The purge stream 65 is passed to the cryogenic wash column 300, where it is washed of its Ar, and the rest of the useful components (N₂ and H₂) are substantially retained as part of the make-up feed.

The crude liquid NH₃ exiting the synthesis loop is flashed to ambient pressure to remove volatile impurities, and is refrigerated to its bubble point for storage and transport. Refrigeration is provided by using a portion of the ammonia itself as a refrigerant in a compression-condensation-flash-evaporation cycle common in the refrigeration art.

About 4100 metric tons per day of oxygen is provided to the gasifier 20 from a cryogenic air separation unit 10.

The overall power consumption to make about 5000 metric ton per day of NH3 is about 180.2 MW. This includes the compression associated with GOX production (compression of air feed into the ion transport membrane assembly 70, and O₂ out of the ion transport membrane assembly into the gasifier 20, as well as the net power requirements of the cryogenic air separation unit), the compression of fresh N₂ and H₂ make-up feed into the ammonia synthesis loop, compression associated with recycle, and refrigeration of the ammonia.

### Example 2-Comparative case

Example 2 is the same as example 1 for the production of 5000 metric tons per day of ammonia, except that there is no ion transport membrane assembly 70. All the oxygen for the gasifier is provided by cryogenic air separation unit 10, and all the N₂ for ammonia synthesis is produced by the cryogenic air separation unit 10. About 7050 metric tons per day of coal and about 5460 metric tons per day of O₂ from the cryogenic air separation unit are fed to the gasifier. About 67,000 Nm³/hr of N₂ is provided by the cryogenic air separation unit 10 for cryowashing and ammonia synthesis.

No purge stream 65 is required from the ammonia synthesis loop, but a similar cryogenic wash unit is used to wash CO from the H₂ feed from the separator 50 and to generate the 3:1 mixture of H₂:N₂.

The overall power consumption for example 2 is 181.8, MW, which is greater than for example 1. The power consumption in example 2 is directly comparable to the power consumption of example 1, since it includes the same scope: O₂ and N₂ production, compression in the ammonia converter, and compression associated with ammonia refrigeration.

## Claims

1. A system for producing ammonia, the system comprising:
an ion transport membrane assembly (70) comprising an ion transport membrane layer and having an inlet for introducing a first feed gas (71) comprising oxygen and nitrogen into the ion transport membrane assembly (70), a first outlet for withdrawing a nitrogen product (73) from the ion transport membrane assembly, and a second outlet for withdrawing a first oxygen product (75) from the ion transport membrane assembly (70);
a cryogenic air separation unit (10) for producing a second oxygen product (13) and a nitrogen-containing by-product (15);
a gasifier (20) operatively disposed to receive at least a portion of the first oxygen product (75) from the ion transport membrane assembly (70) and at least a portion of the second oxygen product (13) from the cryogenic air separation unit (10), the gasifier for reacting a carbonaceous material (21) with the at least a portion of the first oxygen product (75) and the at least a portion of the second oxygen product (13) to produce a synthesis gas (23) comprising H₂, CO₂, CO, and H₂O;
a shift reactor (30) operatively disposed to receive at least a portion of the synthesis gas (23) from the gasifier (20), the shift reactor (30) for reacting the CO in the at least a portion of the synthesis gas with H₂O (31) in the presence of a shift catalyst to produce additional H₂ and CO₂ in the at least a portion of the synthesis gas (23);
a separator (50) operatively disposed to receive at least a portion of the synthesis gas (23) from the shift reactor (30), the separator (50) for separating the at least a portion of the synthesis gas (23) to form a hydrogen product (51) and a by-product (53) comprising at least CO₂, H₂S, and H₂O; and
an ammonia synthesis unit (60) operatively disposed to receive at least a portion of the hydrogen product (51) from the separator (50) and operatively disposed to receive at least a portion of the nitrogen product (73) from the ion transport membrane assembly (70), the ammonia synthesis unit (60) for reacting the at least a portion of the hydrogen product (51) with the at least a portion of the nitrogen product (73) in said ammonia synthesis unit (60) to produce an ammonia product (63).

2. The system of claim 1 further comprising:
a cryogenic wash unit (90), the cryogenic wash unit (90) operatively disposed to receive at least a portion of the hydrogen product (51) from the separator (50) and operatively disposed to receive at least a portion of the nitrogen product (73) from the ion transport membrane assembly (70), to form a mixture (95) comprising hydrogen and nitrogen and a by-product (93) comprising at least CO;
wherein the ammonia synthesis unit (60) is operatively disposed to receive at least a portion of the mixture (95) comprising hydrogen and nitrogen from the cryogenic wash unit (90) such that the ammonia converter is thereby operatively disposed to receive the at least a portion of the hydrogen product (51) from the separator (50) section and the at least a portion of the nitrogen product (73) from the ion transport membrane assembly (70) via the cryogenic wash unit (90).

3. The system according to claim 1 or claim 2 wherein the gasifier (20) is an autothermal reformer.

4. The system according to any one of claims 1 to 3 further comprising:
a second separator (80) operatively disposed to receive at least a portion of the nitrogen product (73) from the ion transport membrane assembly (70), the second separator (80) for separating the at least a portion of the nitrogen product (73) to form a nitrogen-rich product (83) and a by-product (85) comprising at least one non-nitrogen component in the nitrogen product (73), wherein the ammonia synthesis unit (60) is operatively disposed to receive the nitrogen-rich product (83) as the at least a portion of the nitrogen product (73) from the ion transport membrane assembly (70).

5. The system according to claim 4 wherein the second separator (80) comprises at least one of an adsorbent that is selective for oxygen, an electrically driven ion transport membrane for removing oxygen, and a reactively purged ion transport membrane for removing oxygen when the at least one non-nitrogen component is oxygen.

6. The system according to claim 4 wherein the second separator (80) comprises a cryogenic distillation apparatus for removing oxygen and/or argon when the at least one non-nitrogen component is oxygen and/or argon.

7. The system according to any one of claims 1 to 6 further comprising a combustor (100) operatively disposed to receive the nitrogen product (73) from the ion transport membrane assembly (70), the combustor preferably comprising a catalyst that promotes combustion of the fuel (101) with the diatomic oxygen, the combustor (100) for reducing the concentration of the diatomic oxygen in the nitrogen product (73) by reacting the diatomic oxygen with a fuel (101).

8. The system according to claim 7 wherein the combustor (100) is operatively disposed to receive a portion of the synthesis gas (23) as at least a portion of the fuel (101).

9. A process for producing ammonia, the process comprising:
(a) separating a first feed gas (71) comprising oxygen and nitrogen in an ion transport membrane assembly (70) comprising an ion transport membrane layer to form a nitrogen product (73) and a first oxygen product (75);
(b) separating a second feed gas (11) comprising oxygen and nitrogen in a cryogenic air separation unit (10) to form a second oxygen product (13) and a nitrogen-containing by-product (15);
(c) reacting a carbonaceous material (21) and oxygen under reaction conditions sufficient to produce a synthesis gas (23) comprising H₂, CO₂, CO, and H₂O, wherein the oxygen is provided in an amount less than the stoichiometric amount required for complete combustion of the carbonaceous material, and the oxygen is provided by at least a portion of the first oxygen product (75) from the ion transport membrane assembly (70) and at least a portion of the second oxygen product (13) from the cryogenic air separation unit (10);
(d) reacting the CO in at least a portion of the synthesis gas (23) from step (c) with H₂O (31) in the presence of a shift catalyst to produce additional H₂ and CO₂ in the at least a portion of the synthesis gas (23);
(e) separating at least a portion of the synthesis gas (23) from step (d) to form a hydrogen product (51) and a by-product (53) comprising at least CO₂, H₂S, and H₂O; and
(f) reacting at least a portion of the hydrogen product (51) with at least a portion of the nitrogen product (73) from the ion transport membrane assembly (70) under reaction conditions sufficient to produce an ammonia product (63).

10. The process of claim 9 further comprising:
blending at least portion of the hydrogen product (51) from step (e) and at least a portion of the nitrogen product (73) from step (a) to form a blend in a cryogenic wash unit (90), the at least a portion of the hydrogen product (51) and the at least a portion of the nitrogen product (73) blended in a H₂ to N₂ molar ratio ranging from 2.9 to 3.1, and cryogenically washing the blend to form a mixture (95) comprising hydrogen and nitrogen and a second by-product (93) comprising at least CO;
wherein at least a portion of the mixture (95) is the at least a portion of the hydrogen product (51) and the at least a portion of the nitrogen product (73) reacted in step (f).

11. The process of claim 10 wherein the second by-product further comprises at least one of oxygen, argon, and methane.

12. The process of claim 10 or claim 11 further comprising:
separating at least a portion of the nitrogen product (73) from step (a) to form a nitrogen-rich product (83) and a third by-product (85) comprising at least one of the contaminants in the nitrogen product (73), wherein the at least a portion of the nitrogen product blended in claim 10 comprises at least a portion of the nitrogen-rich product (83).

13. The process of any one of claims 9 to 12 further comprising:
separating at least a portion of the nitrogen product (73) from step (a) to form a nitrogen-rich product (83) and a third by-product (85) comprising at least one non-nitrogen component in the nitrogen product (73), wherein the at least a portion of the nitrogen product reacted in step (f) comprises at least a portion of the nitrogen-rich product (83).

14. The process of claim 12 or claim 13 wherein the at least a portion of the nitrogen product (73) is separated using at least one of an adsorbent that is selective for oxygen, an electrically driven ion transport membrane that is selective for oxygen, and a reactively purged ion transport membrane for removing oxygen from the nitrogen product (73) when the at least one non-nitrogen component is oxygen or wherein the at least a portion of the nitrogen product (73) is separated using a cryogenic distillation apparatus (90) when the at least one non-nitrogen component is oxygen and/or argon.

15. The process of any one of claims 9 to 14 wherein the nitrogen product (73) from step (a) comprises diatomic oxygen, the process further comprising:
reacting the diatomic oxygen with a fuel (101) thereby reducing the concentration of the diatomic oxygen in at least a portion of the nitrogen product (73),
wherein the diatomic oxygen is reacted with the fuel preferably in the presence of a catalyst that promotes combustion of the fuel with the diatomic oxygen.
